# EUROPEAN PATENT APPLICATION

(11) **EP 4 432 221 A1**
(43) Date of publication of application: **18.09.2024**
(21) Application number: 23161890.1
(22) Date of filing: 14.03.2023
(51) Int. Cl.: G06T 7/00

(54) **A SYSTEM AND METHOD FOR EVALUATING A CARDIAC REGION OF A SUBJECT**

(71) Applicant: FEops NV, 9052 Gent (BE)
(72) Inventor: MORTIER, Peter Eddy J, B-9052 Gent (BE); DE BEULE, Matthieu Robert Anna Firmin, B-9052 Gent (BE); NAUWYNCK, Maxime, B-9052 Gent (BE); HEFFINCK, Eva, B-9052 Gent (BE); MICHIELS, Kilian, B-9052 Gent (BE)
(74) Representative: V.O.

(57) **Abstract**

A system and method for evaluating a cardiac region of a subject. The method comprises receiving a first image and a second image using a computer system. The first image is obtained at a first moment in time and comprises one or more first image features. The second image is obtained at a second moment in time and comprises one or more second image features. The method comprises pre-processing the data from the first and second images. The method comprises aligning the first image and the second image. The method comprises comparing the first and second image features of the first and second images for determining cardiac characteristics of the cardiac region of the subject. The method comprises determining a difference in cardiac characteristics between the first and second image features. The method comprises displaying the difference in cardiac characteristics on a three-dimensional coronary model on a display.

## Description

### FIELD OF THE INVENTION

The present invention relates to the field of analyzing images for evaluating a cardiac region of a subject. In particular, the invention relates to the field of determining cardiac characteristics in images for evaluating a cardiac region of a subject. More in particular, the invention relates to a system and method for determining a difference in cardiac characteristics between two medical images for evaluating a cardiac region of a subject.

### BACKGROUND

Medical imaging provides many different imaging techniques that together allow for detection and evaluation of many different conditions, in an ever early stage. However, regardless of this, in many cases the proper evaluation still remains challenging and/or time consuming. This may be for a large variety of reasons, for example: the imaged subject is in continuous motion, the obtainable resolution is not sufficient to reveal all necessary details, the size and shape of a subject renders it difficult to resolve or identify an image, the image available renders it difficult to do the evaluation, the differences in tissue structure provides a low contrast, et cetera.

An example wherein the evaluation of some health conditions is difficult to perform is in the field of cardiac imaging. The continuous motion of a living heart combined with the material parameters of the tissue, diminishes the image quality such that various conditions cannot easily be detected with sufficient certainty from a single cardiac image. In certain doubtful cases, a same image being evaluated by multiple physicians may not lead to a decisive conclusion due to disagreement between the physicians being fed by uncertainty on what an image really shows. This of course is not desired.

### SUMMARY

It is an object to provide a computer-implemented method for evaluating a cardiac region of a subject, a method of evaluating a cardiac region of a subject using a trained machine learning data processing model, a method of training a machine learning data processing model and/or an electronic image processing system, that obviates, or at least diminishes the disadvantages mentioned above. More in general, it is an object to provide an improved method for evaluating a cardiac region of a subject from medical images, or system therefore, and/or method of training a machine learning data processing model.

Thereto, according to a first aspect is provided a computer-implemented method for evaluating a cardiac region of a subject from two 2.5D, 3D or 4D medical images. A 2.5D medical image can comprise a stacked layer of two dimensional, 2D, images that capture a cardiac region of a subject, wherein the layers are associated with parallel planes. The medical images can comprise Computed Tomography, CT, images or Magnetic Resonance Imaging, MRI, images. A 4D medical image can comprise a serial CT video or a serial MRI video of a cardiac region of a subject. The method comprises receiving a first image, obtained at a first moment in time, comprising one or more first image features using a computer system.

The method further comprises receiving a second image, obtained at a second moment in time, comprising one or more second image features using the computer system. The one or more first and/or second image features can comprise information on light intensity, contrast, gray-level, points, edges, ridges, objects and/or regions of interest points that are detectable in the respective first and/or second image. Various feature detectors can be used to detect the one or more first and/or second image features. The second moment in time can be later in time than the first moment in time.

The method further comprises pre-processing the data from the first and second images by the computer system. Pre-processing can comprise filtering the image data, e.g. such that noise is reduced, and/or adjusting gray-levels to improve image feature detection. A multi-segment model of the coronary tree can be used. For instance, a 17-segment model of the coronary tree can be used. The 17-segment model can e.g. include the following segments: 1) proximal right coronary artery (p-RCA), 2) mid right coronary artery (m-RCA), 3) distal right coronary artery (d-RCA), 4) right posterior descending artery (R-PDA), 5) left main artery (LM), 6) proximal left anterior descending artery (p-LAD), 7) mid left anterior descending (m-LAD), 8) distal left anterior descending (d-LAD), 9) diagonal 1 (D1), 10) diagonal 2 (D2), 11) proximal left circumflex artery (p-LCX), 12) obtuse marginal 1 (OM1), 13) mid left circumflex artery (m-LCX), 14) obtuse marginal 2 (OM2), 15) left posterior descending artery (L-PDA), 16) left marginal branch (LMB), and 17) right posterolateral branch (R-PLB). Alternatively, the 17 segment model can e.g. include 1) p-RCA, 2) m-RCA, 3) d-RCA, 4) posterior descending artery (PDA), 5) posterolateral branch (PLB), 6) LM, 7) p-LAD, 8) m-LAD, 9) d-LAD, 10) D1, 11) D2, 12) diagonal 3 (D3), 13) p-LCX, 14) distal left circumflex artery (d-LCX), 15) OM1, 16) OM2, 17) obtuse marginal 3 (OM3). However, other 17-segment models can be used. Also, other multi-segment models can be used, using different numbers of segments, such as, but not limited to, 15, 16 or 18 segments. The pre-processing can be performed using centerline registration to create a coronary tree structure corresponding to the multi-segment model. The centerline registration can be configured to deform the image so as to move the centerlines of coronary blood vessels in the image to coincide with centerlines of predetermined coronary blood vessel locations according to the multi-segment model. Alternatively, or additionally, the centerline registration can be configured to deform the multi-segment model so as to move the centerlines of coronary blood vessels of the model to coincide with centerlines of coronary blood vessels in the image.

The method further comprises aligning, by the computer system, the first image and the second image. Aligning can comprise adjusting the first and second images such that the coronary artery locations on said images at least partially overlap when positioning said images on top of each other. Aligning can comprise registration using segmentation of the first and second images.

The method further comprises comparing, by the computer system, the first and second image features of the first and second images for determining cardiac characteristics of the cardiac region of the subject. Comparing image features can comprise detecting the first and second image features. Comparing can comprise detecting similarities and/or differences in image features and their corresponding locations within the respective image. Comparing can comprise calculating actual differences between the first image and the second image, e.g. on a pixel-by-pixel basis. The (pixel-wise) difference between the first and second image can be representative for cardiac characteristics at the cardiac region corresponding to the (pixel) location of the difference.

Pre-processing can enable improved feature detection for comparison of the first and second image features. The method further comprises determining, by the computer system, a difference in cardiac characteristics between the first and second image features. The method further comprises displaying the difference in cardiac characteristics on a three-dimensional cardiac model, such as a three-dimensional coronary model, on a display. The difference in cardiac characteristics can be displayed on the coronary arteries of the three-dimensional coronary model using color, such as a false color scale. The colored part can comprise the change in coronary artery diameter or change in amount of plaque, e.g. in the false color scale. The display can be a screen, such as a television screen or computer screen. The display can be fixed or movable with respect to the environment. The display can be positioned in e.g. a hospital room for use by a physician.

Optionally, the aligning includes mapping each voxel or pixel in one of the first and second images to a voxel or pixel location corresponding to a location of the corresponding image feature in the other image. A voxel or pixel can be mapped to more than one voxel or pixel location, e.g. when interpolating image data such that a voxel or pixel is mapped to multiple voxel or pixel locations of the corresponding image feature in the other image.

Optionally, the difference in cardiac characteristics is determined taking into account the cardiac phase. The first and second images can comprise a different or similar moment in the cardiac phase. The differences caused by the first and second images having a different moment in the cardiac phase can be detected and indicated on the display. Optionally, the aligning can take the cardiac phase into account.

Optionally, the displaying further comprises displaying image features and/or parameter values on the display. Image features can be displayed by highlighting the corresponding parts of the respective image, e.g. using color and/or indications such as arrows, lines or circles. Parameter values can be displayed on or close to the three-dimensional coronary model, e.g. as false color scale. A change in parameter values between the first and second image can be visualized in numbers or diagrams, and optionally a relative change in parameter values is shown on the display.

Optionally, the method further comprises manipulating the view and/or displayed parameter values of the first or second image, and optionally comprising automatically changing the view and/or displayed parameter values of the other image accordingly. The view and/or displayed parameter values can e.g. be manipulated by a user through a mouse, key, keypad or joystick. The display can comprise a touch-screen, such that the view and/or displayed parameter values can be manipulated by providing input through the touch-screen.

Optionally, the method further comprises identifying, by the computer system, a first region of interest in the first image and a second region of interest in the second image, wherein the first and second regions of interest are similar to each other, optionally further comprising highlighting, by the computer system, the first and second regions of interest in the first and second images. The first and second regions of interest can be highlighted using color and/or indications such as arrows, lines or circles.

Optionally, the first and/or second region of interest comprises coronary arteries including the presence of plaque. The coronary arteries can be segmented using a coronary tree, wherein a first and/or second region of interest can comprise one or more segments of the coronary tree. The difference in cardiac characteristics can comprise change in coronary artery diameter and/or change in amount of plaque. The plaque can comprise calcified plaque, non-calcified plaque and/or low attenuation plaque. In CT images, the low attenuation plaque is measured in voxels or pixels with a Hounsfield Unit, HU, value of less than a first predetermined threshold. The first predetermined threshold value can e.g. be 30 HU. Non-calcified plaque is detected in voxels or pixels with a HU value of less than a second predetermined threshold value. The second predetermined threshold value can be 350 HU. Calcified plaque is detected in voxels or pixels with a HU value of the second threshold value or more.

According to a second aspect is provided in an electronic image processing system, a method of evaluating a cardiac region of a subject, from 2.5D, 3D or 4D medical image data, by using a trained machine learning data processing model. The trained machine learning data processing model is trained to determine cardiac characteristics of the cardiac region of the subject. The method comprises receiving, by a controller, the image data. The method comprises providing the image data to the trained machine learning data processing model for determining, using the trained machine learning data processing model, cardiac characteristics of the cardiac region of the subject, wherein the image data is associated with a lifecycle parameter indicating a first moment in time of the subject. The method comprises determining, by the trained machine learning data processing model, the cardiac characteristics of the cardiac region at a second moment in time, wherein the second moment in time is similar to or different from the first moment in time. The trained machine learning data processing model can e.g. comprise a support vector machine, decision tree, logistic regression, convolutional neural network (CNN), long short-term memory (LSTM), and/or transformer network (e.g. Transmorph) for determining the cardiac characteristics of the cardiac region at the second moment in time.

Optionally, the method further comprises, prior to providing the image data to the trained machine learning data processing model, pre-processing, by the controller, the image data. Alternatively, or additionally, the method further comprises pre-processing, by the trained machine learning data processing model, the image data. Pre-processing can comprise filtering the image data, e.g. so as to reduce noise in the image data, and/or to adjust gray-levels in the image data to improve image feature detection. The pre-processing can be performed using centerline registration to create a coronary tree structure corresponding to the multi-segment model. The coronary tree structure can be used for labeling image data to indicate its corresponding location and/or function in the coronary arterial anatomy.

Optionally, the method further comprises, prior to the providing the image data to the trained machine learning data processing model, modifying, by the controller, the image by aligning the image with a reference image associated with a training data set with which the trained machine learning data processing model has been trained. Alternatively, or additionally, the method further comprises modifying, by the trained machine learning data processing model, the image by aligning the image with a reference image associated with a training data set with which the trained machine learning data processing model has been trained. Aligning can comprise adjusting the first and second images such that the coronary artery locations on said images at least partially overlap when positioning said images on top of each other.

Optionally, the cardiac characteristics of the cardiac region of the subject are associated with development of cardiac characteristics of the subject indicating predicted future characteristics of the cardiac condition, wherein the image data optionally comprises data from the subject prior to receiving medical treatment. The method can further comprise determining, by the trained machine learning data processing model, predicted cardiac characteristics of the cardiac region after receiving medical treatment. The cardiac characteristics of the cardiac region at the second moment in time can comprise a prediction based on the image data associated with the first moment in time of the subject.

Optionally, the step of receiving the image comprises receiving a plurality of images each representing a different moment in time at a similar and/or different moment in the cardiac phase, such that the accuracy of cardiac characteristics of the cardiac region increases. The plurality of images can comprise images at a similar moment in the cardiac phase, but taken at different instances of the cardiac phase, e.g. at a plurality of consecutive instances of the cardiac phase. The plurality of images can comprise images taken within a single, or adjacent cardiac cycles. The moment in the cardiac phase comprises e.g. a period of the cardiac cycle, such as a first period wherein the heart muscle relaxes and refills with blood or a second period wherein the heart muscle contracts and pumps blood.

Optionally, the image data is associated with a first region of interest, the method further comprising obtaining the output of the trained machine learning data processing model, an output image associated with a second region of interest, highlighting in the output image the second region of interest, wherein the first and second regions of interest correspond to each other, and wherein the output image comprises the cardiac characteristics of the cardiac region at the second region of interest, wherein the first region of interest optionally comprises coronary arteries including the presence of plaque and the cardiac characteristics include at least one of size, location and severity of the plaque and diameter or volume of a coronary artery. The first and second regions of interest can be highlighted using color and/or indications such as arrows, lines or circles. The cardiac characteristics can be indicated from absolute values of a respective first or second image, and/or the cardiac characteristics can be indicated as relative values, i.e. using a percentage, when compared between the images.

According to a third aspect is provided a method of training a machine learning data processing model for performing a method for determining cardiac characteristics of a cardiac region of a subject as described. The method comprises the step of a) receiving, by the machine learning data processing model, a training data set comprising training data, the training data including image data of a plurality of images. The method can comprise the step of b) receiving, by the machine learning data processing model, a ground truth data set comprising ground truth data indicative of a ground truth cardiac characteristic that matches with the image data of the plurality of images of the training data. The training data set is the initial dataset used to teach the machine learning data processing model to recognize patterns or perform to predetermined criteria, while evaluating the accuracy of said machine learning data processing model. The ground truth data can include time information associated with the moment in the lifetime of the subject and/or associated with the moment in the time of the development of the cardiac characteristic. The method comprises the step of c) training the machine learning data processing model based on the training data received in step a), and optionally the ground truth data received in step b), for enabling the machine learning data processing model, after completion of the training period, to perform the step of determining the cardiac characteristics of the cardiac region of the subject. The method can comprise the step of validating the performance of determining the cardiac characteristics of the cardiac region of the subject using the ground truth data.

Optionally, the ground truth cardiac characteristic includes time and at least one of size, location and severity of plaque and diameter or volume of a coronary artery. The ground truth cardiac characteristic includes the information of the image data of the plurality of images of the training data that is known to be real or true for said images.

Optionally, the training data includes for one subject a plurality of image data obtained at different moments in time and associated data on the moments in time. The training data can comprise data regarding at least one of size, location and severity of plaque and diameter or volume of a coronary artery. The training data can comprise data of a plurality of subjects.

According to a fourth aspect is provided an electronic image processing system for use in a method as described, the system comprising a trained machine learning data processing model as described, for determining cardiac characteristics of a cardiac region of a subject from 2.5D, 3D or 4D medical image data, wherein the system further comprises one or more processors and a memory storing the trained machine learning data processing model and one or more instructions, which when loaded into the memory enable the one or more processors to perform the following method steps as described below. The method comprises receiving, by a controller, the image data. The method comprises providing the image data to the trained machine learning data processing model for determining, using the trained machine learning data processing model, cardiac characteristics of the cardiac region of the subject. The image data is associated with a lifecycle parameter indicating a first moment in time of the subject. The method comprises determining, by the trained machine learning data processing model, the cardiac characteristics of the cardiac region at a second moment in time, wherein the second moment in time is similar to or different from the first moment in time. At least one of the one or more processors, the memory and the controller can be part of a digital circuit, such as in a computer system. At least one of the one or more processors, the memory and the controller can be connected to a display. The display can be wiredly or wirelessly connected to said at least one of the one or more processors, the memory and the controller.

Optionally, the system further comprises, prior to the providing the image data to the trained machine learning data processing model, pre-processing, by the controller, the image data. Alternatively, or additionally, the system further comprises pre-processing, e.g. by the trained machine learning data processing model, the image data. Pre-processing can e.g. comprise adjusting gray-levels thereby allowing for better image feature detection such that determining cardiac characteristics can be improved. Pre-processing can comprise reducing noise and/or removing outliers in image data.

Optionally, the system further comprises, prior to providing the image data to the trained machine learning data processing model, modifying, by the controller, the image by aligning the image with a reference image associated with a training data set with which the trained machine learning data processing model has been trained. Alternatively, or additionally, the system further comprises modifying, by the trained machine learning data processing model, the image by aligning the image with a reference image associated with a training data set with which the trained machine learning data processing model has been trained.

Optionally, the CT image data is associated with a region of interest, further comprising obtaining at the output of the trained machine learning data processing model, an output image highlighting in the output image the region of interest, wherein the output image comprises the cardiac characteristics of the cardiac region at the region of interest of the reference image.

It will be appreciated that any of the aspects, features and options described in view of the computer-implemented method for evaluating a cardiac region of a subject apply equally to the method of evaluating a cardiac region of a subject using a trained machine learning data processing model, method of training a machine learning data processing model and to the electronic image processing system, and vice versa. It will also be clear that any one or more of the above aspects, features and options can be combined.

### BRIEF DESCRIPTION OF THE DRAWINGS

Embodiments of the present invention will now be described in detail with reference to the accompanying drawings in which:
Figure 1 shows an exemplary flow chart of a computer-implemented method for evaluating a cardiac region of a subject;
Figure 2 shows an exemplary flow chart of a method of evaluating a cardiac region of a subject by using a trained machine learning data processing model;
Figure 3 shows an exemplary flow chart of a method of training a machine learning data processing model for performing a method of evaluating a cardiac region of a subject;
Figure 4 shows an electronic image processing system for use in a method of evaluating a cardiac region of a subject;
Figure 5 shows a three-dimensional coronary model showing a cardiac region of a subject; and
Figure 6 shows a three-dimensional coronary model showing a cardiac region of a subject.

### DETAILED DESCRIPTION

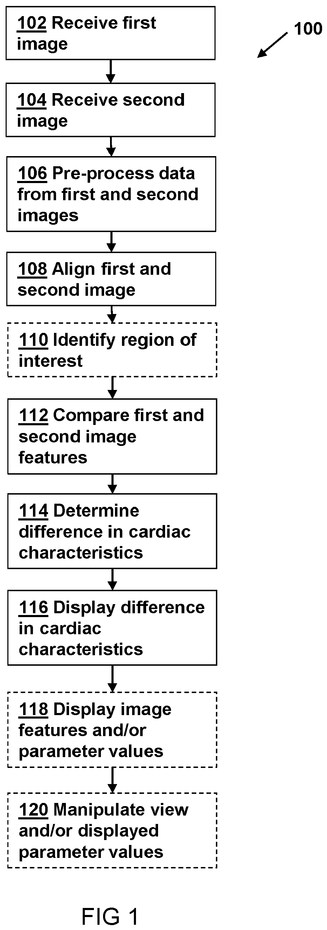

Figure 1 shows an example of a flow chart of a computer-implemented method 100 for evaluating a cardiac region of a subject from two two-and-a-half dimensional, 2.5D, three dimensional, 3D, or four dimensional, 4D, medical images. Optional steps are shown in dashed boxes. Here, a 2.5D medical image includes a stacked layer of two dimensional, 2D, images that capture a cardiac region of a subject, wherein the layers are associated with parallel planes. The medical images can comprise Computed Tomography, CT, images or Magnetic Resonance Imaging, MRI, images. A 4D medical image can in this example comprise a serial CT video or a serial MRI video of a cardiac region of a subject.

In a first step 102 a first image is received using a computer system. The first image is obtained at a first moment in time and comprises one or more first image features. The method 100 further comprises receiving, using the computer system, a second image in step 104. The second image is obtained at a second moment in time and comprises one or more second image features. Step 104 can be performed prior to, after or in parallel with step 102. The first moment in time can be earlier than, later than, or coincident with the second moment in time. In step 106, the data from the first and second images is pre-processed by the computer system. Step 106 can be performed after steps 102 and 104. The pre-processing can be performed using centerline registration to create a coronary tree structure corresponding to the multi-segment model. The first image and the second image are aligned, by the computer system, in step 108. The aligning in step 108 can comprise mapping each voxel or pixel in one of the first and second images to a voxel or pixel location corresponding to a location of the corresponding image feature in the other image. A voxel or pixel can be mapped to more than one voxel or pixel location, for example when interpolating image data a voxel or pixel can be mapped to a plurality of voxel or pixel locations of the corresponding image feature in the other image. Step 108 can be performed after step 106. In step 110, a first region of interest in the first image and a second region of interest in the second image can be identified by the computer system, wherein the first and second regions of interest are similar to each other. The first and second regions of interest can e.g. relate to the same anatomical feature(s). Optionally, the computer system highlights the first and second regions of interest in the first and second images. The first and/or second region of interest can comprise coronary arteries including the presence of plaque. The plaque can comprise calcified plaque, non-calcified plaque and/or low attenuation plaque. In CT images, the low attenuation plaque is measured in voxels or pixels with a Hounsfield Unit, HU, value of less than a first predetermined threshold. The first predetermined threshold value can e.g. be about 30 HU. Non-calcified plaque is detected in voxels or pixels with a HU value of less than a second predetermined threshold value. The second predetermined threshold value can be about 350 HU. Calcified plaque is detected in voxels or pixels with a HU value of the second threshold value or more. Step 110 can be performed prior to, after or in parallel with step 108.

The method 100 further comprises comparing, by the computer system, the first and second image features of the first and second images for determining cardiac characteristics of the cardiac region of the subject in step 112. The cardiac characteristics can comprise coronary artery diameter or plaque. Step 112 can be performed after step 110. In step 114, a difference in cardiac characteristics between the first and second image features is determined by the computer system. The difference in cardiac characteristics can be determined taking into account the cardiac phase. Step 114 can be performed after step 112. The difference in cardiac characteristics is in this example displayed on a three-dimensional coronary model on a display in step 116. Step 116 can be performed after step 114. Optionally, step 118 comprises displaying image features and/or parameter values on the display. Step 118 can be performed prior to, after or in parallel with step 116. The displaying can include displaying the first image, the second image, or both the first and second image. The displaying can include displaying the difference in cardiac characteristics, e.g. as an overlay, e.g. in false colors, on the first and/or second image. In step 120, the view and/or displayed parameter values of the first or second image can be manipulated. The view and/or displayed parameter values of the other image can be automatically changed such that the view and/or displayed parameter values of the images correspond. Step 120 can be performed after or in parallel with step 118.

In the example of figure 1, i.a. the steps of pre-processing 106, aligning 108, comparing 112, and/or determining 114 can be performed using a trained machine learning data processing model.

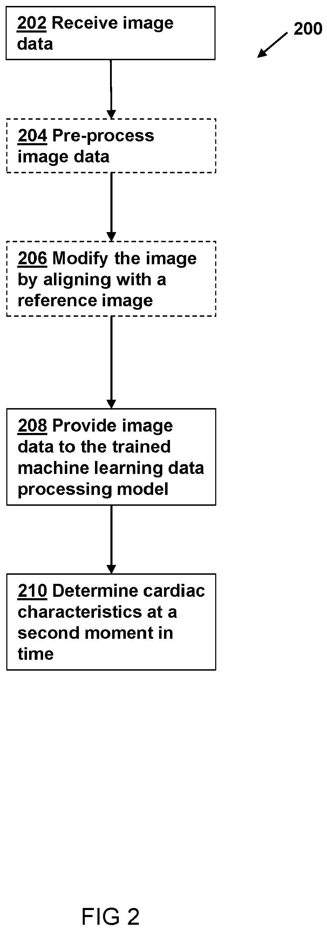

Figure 2 shows an example of a flow chart of a method 200 of evaluating a cardiac region of a subject by using a trained machine learning data processing model. The cardiac region of the subject is evaluated from 2.5D, 3D or 4D medical image data. The trained machine learning data processing model is trained to determine cardiac characteristics of the cardiac region of the subject. Optional steps are shown in dashed boxes. Thereto, in a first step 202 the image data is received by a controller. Step 202 can comprise receiving a plurality of images each representing a different moment in time and/or a similar moment in the cardiac phase. The plurality of images being captured at a different moment in time increases the accuracy of cardiac characteristics of the cardiac region.

Optionally, step 204 comprises pre-processing the image data. The image data can be pre-processed using the controller or using the trained machine learning data processing model. Step 204 can be performed after step 202. In step 206, the image can be modified, by the controller or by the trained machine learning data processing model, by aligning the image with a reference image. The reference image can be associated with a training data set with which the trained machine learning data processing model has been trained. Step 206 can be performed after step 204.

In step 208, the image data is provided to the trained machine learning data processing model for determining, using the trained machine learning data processing model, cardiac characteristics of the cardiac region of the subject. The image data is associated with a lifecycle parameter indicating a first moment in time of the subject. Step 208 can be performed after step 206. The trained machine learning data processing model determines the cardiac characteristics of the cardiac region at a second moment in time in step 210. The second moment in time is similar to or different from the first moment in time. The second moment in time can be later than the first moment in time. The second moment in time can be in the future. The trained machine learning data processing model can predict the cardiac characteristics of the cardiac region at a second moment in time in the future. Other characteristics of the subject, such as the subject's age and/or body mass can be taken into account in determining cardiac characteristics. Step 210 can be performed after step 208. The cardiac characteristics of the cardiac region of the subject can be associated with development of cardiac characteristics of the subject indicating possible future characteristics of the cardiac condition. The image data optionally comprises data from the subject prior to receiving medical treatment, such as surgery and/or therapy and/or medication, such that step 210 comprises predicting, by the trained machine learning data processing model, the cardiac characteristics of the cardiac region after medical treatment would have been received. The method can include predicting, by the trained machine learning data processing model, the cardiac characteristics of the cardiac region for a plurality of different scenarios, such as two or more of no treatment, surgery, alternative surgery, medication, alternative medication, exercise, alternative exercise, and the like. The cardiac characteristics can comprise coronary artery diameter and/or plaque. The image data received in step 202 can be associated with a first region of interest, and at the output of the trained machine learning data processing model, an output image associated with a second region of interest can be obtained. In the output image, the second region of interest is highlighted. The first and second regions of interest are similar to each other. The output image can comprise the cardiac characteristics of the cardiac region at the second region of interest. The first region of interest optionally comprises coronary arteries including the presence of plaque and the cardiac characteristics include at least one of size, location and severity of the plaque and diameter or volume of a coronary artery. It will be appreciated that a plurality of output images can be obtained, e.g. an output image per scenario.

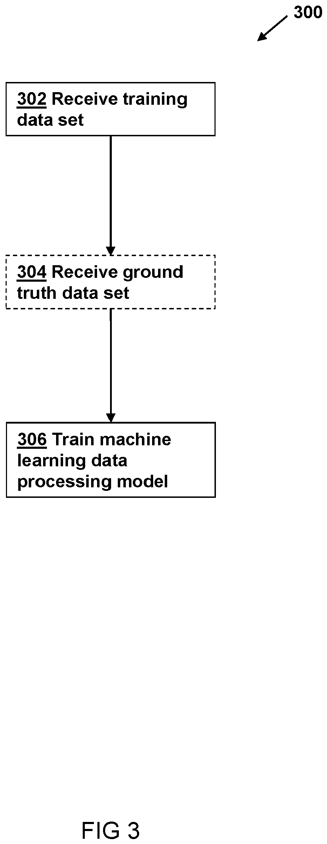

Figure 3 shows an example of a flow chart of a method 300 of training a machine learning data processing model for performing a method 200. Optional steps are shown in dashed boxes. The machine learning data processing model is trained to determine cardiac characteristics of the cardiac region of the subject from 2.5D, 3D or 4D medical image data. Thereto, in a first step 302 a training data set comprising training data is received by the machine learning data processing model. The training data includes image data of a plurality of images. The training data can include for one subject a plurality of image data obtained at different moments in time and associated data on the moments in time.

The method 300 further comprises receiving, by the machine learning data processing model, a ground truth data set comprising ground truth data in step 304. The ground truth data is indicative of a ground truth cardiac characteristic that matches with the image data of the plurality of images of the training data. Step 304 can be performed after step 302.

In step 306, the machine learning data processing model is trained based on the training data received in step 302, and optionally, the ground truth data received in step 304. Optionally, (a fraction of the) ground truth data is used for validation of the performance of the method. If ground truth data is used for validation, it should not be used during the actual training. The ground truth cardiac characteristic can include time and at least one of size, location and severity of plaque and diameter or volume of a coronary artery. The machine learning data processing model is trained for enabling the machine learning data processing model, after completion of the training period, to perform the step of determining the cardiac characteristics of the cardiac region of the subject. Step 306 can be performed after step 304.

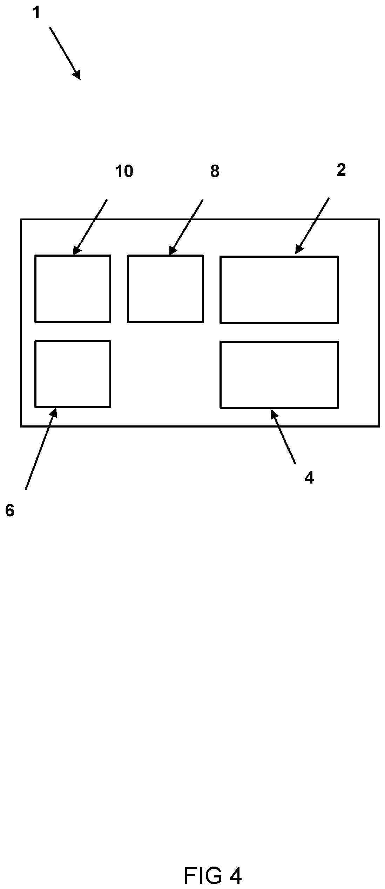

Figure 4 shows an example of an electronic image processing system 1 for use in a method 100 or 200. The system 1 comprises a trained machine learning data processing model that is trained according to method 300 for determining cardiac characteristics of a cardiac region of a subject from 2.5D, 3D or 4D medical image data. The system 1 further comprises a processor 2 and a memory 10 storing the trained machine learning data processing model and one or more instructions, which when loaded into the memory 10 enable the processor 2 to perform the steps of method 200.

System 1 may include one or more processors 2, communication circuitry 4, power supply 6, user interface 8, and/or memory 10. One or more electrical components and/or circuits may perform some of or all the roles of the various components described herein. Although described separately, it is to be appreciated that electrical components need not be separate structural elements. For example, system 1 and communication circuitry 4 may be embodied in a single chip. In addition, while system 1 is described as having memory 10, a memory chip(s) may be separately provided.

System 1 may contain memory and/or be coupled, via one or more buses, to read information from, or write information to, memory. Memory 10 may include processor cache, including a multi-level hierarchical cache in which different levels have different capacities and access speeds. The memory may also include random access memory (RAM), other volatile storage devices, or non-volatile storage devices. Memory 10 may be RAM, ROM, Flash, other volatile storage devices or non-volatile storage devices, or other known memory, or some combination thereof, and preferably includes storage in which data may be selectively saved. For example, the storage devices can include, for example, hard drives, optical discs, flash memory, and Zip drives. Programmable instructions may be stored on memory 10 to execute algorithms for identifying anatomical landmarks in medical images, e.g., MSCT, generating virtual 3D models of anatomical structures, and deriving measurements of the identified anatomical landmarks and structures.

System 1 may incorporate processor 2, which may consist of one or more processors and may be a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein. System 1 also may be implemented as a combination of computing devices, e.g., a combination of a DSP and a microprocessor, a plurality of microprocessors, one or more microprocessors in conjunction with a DSP core, or any other such configuration.

System 1, in conjunction with firmware/software stored in the memory may execute an operating system, such as, for example, Windows, Mac OS, Unix or Solaris 5.10. System 1 also executes software applications stored in the memory. For example, the software may include, Unix Korn shell scripts, and/or may be programs in any suitable programming language known to those skilled in the art, including, for example, C++, PHP, or Java.

Communication circuitry 4 may include circuitry that allows system 1 to communicate with an image capture device and/or other computing devices for receiving image files, e.g., MSCT. Additionally or alternatively, image files may be directly uploaded to system 1. Communication circuitry 4 may be configured for wired and/or wireless communication over a network such as the Internet, a telephone network, a Bluetooth network, and/or a WiFi network using techniques known in the art. Communication circuitry 4 may be a communication chip known in the art such as a Bluetooth chip and/or a WiFi chip. Communication circuitry 4 permits system 1 to transfer information, such as 3D model reconstructions and measurements, locally and/or to a remote location such as a server.

Power supply 6 may supply alternating current or direct current. In direct current embodiments, power supply may include a suitable battery such as a replaceable battery or rechargeable battery and apparatus may include circuitry for charging the rechargeable battery, and a detachable power cord. Power supply 6 may be charged by a charger via an inductive coil within the charger and an inductive coil within the power supply. Alternatively, power supply 6 may be a port to allow system 1 to be plugged into a conventional wall socket, e.g., via a cord with an AC to DC power converter and/or a USB port, for powering components within system 1.

User interface 8 may be used to receive inputs from, and/or provide outputs to, a user. For example, user interface 8 may include a touchscreen, display, switches, dials, lights, etc. Accordingly, user interface 8 may display information such as 3D model reconstructions, measurements, and/or simulations. Moreover, user interface 8 may receive user input. In some embodiments, user interface 8 is provided on a remote, external computing device communicatively connected to system 1 via communication circuitry 4.

Memory 10, which is one example of a non-transitory computer-readable medium, may be used to store operating system, and modules provided in the form of computer-executable instructions that may be executed by processor 2 for performing various operations in accordance with the disclosure.

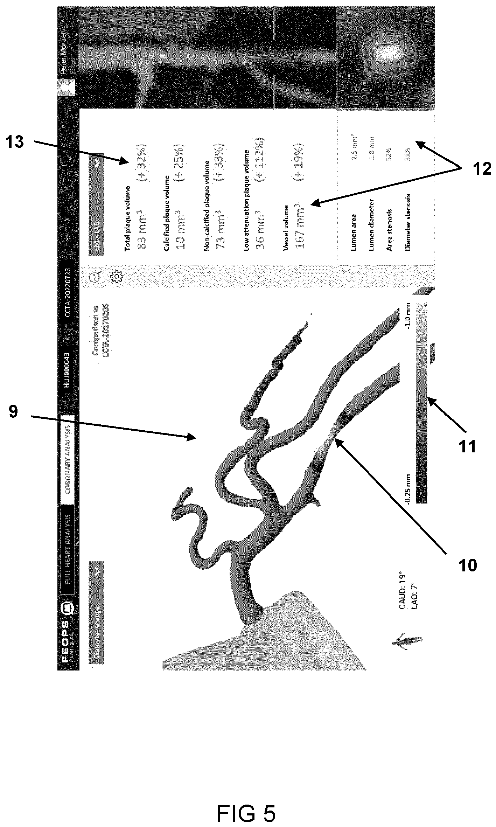

Figure 5 shows an example of a user interface displaying a second three-dimensional coronary model 9 and showing a comparison of a cardiac region of a subject between a first image (not shown) and a second image. The difference in cardiac characteristics between the first and second image features is determined according to the computer-implemented method 100 and is in this example shown in the colored part 10 of the coronary arteries, here in a false color scale 11. The second three-dimensional coronary model 8 is displayed on a display, e.g. for use during examination of a subject by a physician. Here, second parameter values 12 are displayed on the display. It will be appreciated that image features of the first and second image can be displayed as well. Here the difference in cardiac characteristics between the first and second image features is also shown numerically, here as a percentage of change, at 13. In this example, the second parameters are total plaque volume, calcified plaque volume, non-calcified plaque volume, low attenuation plaque volume, vessel volume, lumen area, lumen diameter, stenosis area and stenosis diameter. Optional parameters can be aortic valve calcification, ascending aorta diameter, porcelain aorta, aortic valve morphology, mitral valve calcification, cardiomyopathy and myocardial calcification.

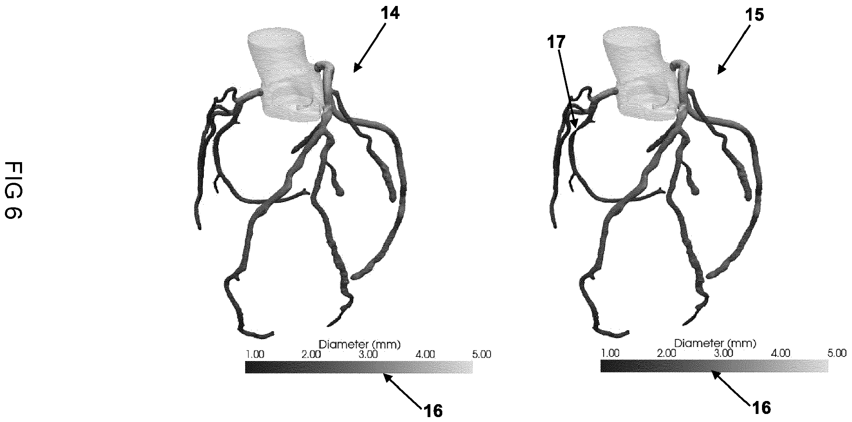

Figure 6 shows an example of a user interface displaying a second three-dimensional coronary model 15 showing a prediction of a cardiac region of a subject. In this example, a first three-dimensional coronary model 14 is constructed from a first medical image. Here, the first three-dimensional coronary model 14 is constructed using centerline registration of geometric artery data extracted from the first medical image with a coronary artery tree model, here a multi-segment model of the coronary tree, in particular a 17-segment model of the coronary tree. Here, the difference in cardiac characteristics between the first moment in time, represented by the first three-dimensional coronary model 14, and the second moment in time, represented by the second three-dimensional coronary model 15, is determined by the trained machine learning data processing model according to the method 200. The difference in cardiac characteristics in this example can be assessed from the difference between the displayed first three-dimensional coronary model 14 and second three-dimensional coronary model 15. In this example, the first and second three-dimensional coronary models 14, 15 are represented as a coronary tree showing an indication of a local diameter of the respective coronary arteries. Here, the local diameter is represented by a false color scale 16. The local diameter in this example is also indicated by a diameter of the respective arteries in the three dimensional model. In this example, a predicted reduction of the local diameter at the right coronary is indicated at 17. The second three-dimensional coronary model 15 is displayed on a display, e.g. for use during examination of a subject by a physician, e.g. in combination with the first three-dimensional coronary model 14, for simplifying assessment of differences. Additionally, or alternatively, differences between the first three-dimensional coronary model 14 and the second three-dimensional coronary model 15 may be indicated graphically, e.g. by highlights, indicators, colors, or a false color scale. Numerical values of the second parameter values (not shown) may also be displayed on the display. Image features of the input image, of which the image data is received in step 202, can be displayed as well. The difference in cardiac characteristics between the first and second image features can also shown numerically, e.g. as a percentage of change. In this example, the second parameters can be total plaque volume, calcified plaque volume, non-calcified plaque volume, low attenuation plaque volume, vessel volume, lumen area, lumen diameter, stenosis area and stenosis diameter. Optional parameters can be aortic valve calcification, ascending aorta diameter, porcelain aorta, aortic valve morphology, mitral valve calcification, cardiomyopathy and myocardial calcification.

Herein, the invention is described with reference to specific examples of the invention. It will, however, be evident that various modifications and changes may be made therein, without departing from the essence of the invention. For the purpose of clarity and a concise description features are described herein as part of the same or separate embodiments, however, alternative embodiments having combinations of all or some of the features described in these separate embodiments are also envisaged.

However, other modifications, variations, and alternatives are also possible. The specifications, drawings and examples are, accordingly, to be regarded in an illustrative sense rather than in a restrictive sense.

For the purpose of clarity and a concise description features are described herein as part of the same or separate embodiments, however, it will be appreciated that the scope of the invention may include embodiments having combinations of all or some of the features described.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean `at least one', and do not exclude a plurality. The mere fact that certain measures are recited in mutually different claims does not indicate that a combination of these measures cannot be used to an advantage.

## Claims

1. A computer-implemented method for evaluating a cardiac region of a subject from two 2.5D, 3D or 4D medical images, the method comprising the steps of:
- receiving a first image, obtained at a first moment in time, comprising one or more first image features using a computer system;
- receiving a second image, obtained at a second moment in time, comprising one or more second image features using the computer system;
- pre-processing the data from the first and second images by the computer system;
- aligning, by the computer system, the first image and the second image;
- comparing, by the computer system, the first and second image features of the first and second images for determining cardiac characteristics of the cardiac region of the subject;
- determining, by the computer system, a difference in cardiac characteristics between the first and second image features; and
- displaying the difference in cardiac characteristics on a three-dimensional coronary model on a display.

2. The method according to claim 1, wherein aligning includes mapping each voxel or pixel in one of the first and second images to a voxel or pixel location corresponding to a location of the corresponding image feature in the other image.

3. The method according to claim 1, wherein the difference in cardiac characteristics is determined taking into account the cardiac phase.

4. The method according to claim 1, wherein the displaying further comprises displaying image features and/or parameter values on the display.

5. The method according to claim 4, further comprising manipulating the view and/or displayed parameter values of the first or second image, and optionally comprising automatically changing the view and/or displayed parameter values of the other image accordingly.

6. The method according to any of claims 1-5, further comprising identifying, by the computer system, a first region of interest in the first image and a second region of interest in the second image, wherein the first and second regions of interest are similar to each other, optionally further comprising highlighting, by the computer system, the first and second regions of interest in the first and second images, wherein optionally the first and/or second region of interest comprises coronary arteries including the presence of plaque.

7. In an electronic image processing system, a method of evaluating a cardiac region of a subject, from 2.5D, 3D or 4D medical image data, by using a trained machine learning data processing model, wherein the trained machine learning data processing model is trained to determine cardiac characteristics of the cardiac region of the subject, the method comprising in the following order the steps of:
- receiving, by a controller, the image data;
- providing the image data to the trained machine learning data processing model for determining, using the trained machine learning data processing model, cardiac characteristics of the cardiac region of the subject, wherein the image data is associated with a lifecycle parameter indicating a first moment in time of the subject; and
- determining, by the trained machine learning data processing model, the cardiac characteristics of the cardiac region at a second moment in time, wherein the second moment in time is similar to or different from the first moment in time.

8. The method according to claim 7, further comprising pre-processing, prior to providing the image data to the trained machine learning data processing model by the controller, or by the trained machine learning data processing model, the image data.

9. The method according to claim 7 or 8, further comprising modifying, prior to providing the image data to the trained machine learning data processing model by the controller, or by the trained machine learning data processing model, the image by aligning the image with a reference image associated with a training data set with which the trained machine learning data processing model has been trained.

10. The method according to claim 7, 8 or 9, wherein the cardiac characteristics of the cardiac region of the subject are associated with development of cardiac characteristics of the subject indicating possible future characteristics of the cardiac condition, wherein the image data optionally comprises data from the subject prior to receiving medical treatment, further comprising determining, by the trained machine learning data processing model, the cardiac characteristics of the cardiac region after receiving medical treatment, wherein optionally the step of receiving the image comprises receiving a plurality of images each representing a different moment in time at a similar and/or different moment in the cardiac phase, such that the accuracy of cardiac characteristics of the cardiac region increases.

11. The method according to any of claim 7-10, wherein the image data is associated with a first region of interest, further comprising obtaining at the output of the trained machine learning data processing model, an output image associated with a second region of interest, highlighting in the output image the second region of interest, wherein the first and second regions of interest are similar to each other, and wherein the output image comprises the cardiac characteristics of the cardiac region at the second region of interest, wherein the first region of interest optionally comprises coronary arteries including the presence of plaque and the cardiac characteristics include at least one of size, location and severity of the plaque and diameter or volume of a coronary artery.

12. A method of training a machine learning data processing model for performing a method according to any of the claims 7-11, for determining cardiac characteristics of a cardiac region of a subject from 2.5D, 3D or 4D medical image data, the method comprising the steps of:
a) receiving, by the machine learning data processing model, a training data set comprising training data, the training data including image data of a plurality of images;
b) optionally receiving, by the machine learning data processing model, a ground truth data set comprising ground truth data indicative of a ground truth cardiac characteristic that matches with the image data of the plurality of images of the training data;
c) training the machine learning data processing model based on the training data received in step a), and optionally the ground truth data received in step b), for enabling the machine learning data processing model, after completion of the training period, to perform the step of determining the cardiac characteristics of the cardiac region of the subject.

13. Method according to claim 12, wherein the ground truth cardiac characteristic includes time and at least one of size, location and severity of plaque and diameter or volume of a coronary artery, and/or wherein the training data includes for one subject a plurality of image data obtained at different moments in time and associated data on the moments in time.

14. An electronic image processing system for use in a method according to any of the claims 7-11, the system comprising a trained machine learning data processing model according to any of claims 14-16, for determining cardiac characteristics of a cardiac region of a subject from 2.5D, 3D or 4D medical image data, wherein the system further comprises one or more processors and a memory storing the trained machine learning data processing model and one or more instructions, which when loaded into the memory enable the one or more processors to perform the steps of:
- receiving, by a controller, the image data;
- providing the image data to the trained machine learning data processing model for determining, using the trained machine learning data processing model, cardiac characteristics of the cardiac region of the subject;
wherein the image data is associated with a lifecycle parameter indicating a first moment in time of the subject; and
- determining, by the trained machine learning data processing model, the cardiac characteristics of the cardiac region at a second moment in time, wherein the second moment in time is similar to or different from the first moment in time.

15. The electronic image processing system according to claim 14, further comprising pre-processing the image data, prior to the providing the image data to the trained machine learning data processing model by the controller, or by the trained machine learning data processing model, and/or further comprising modifying, prior to the providing the image data to the trained machine learning data processing model by the controller, or by the trained machine learning data processing model, the image by aligning the image with a reference image associated with a training data set with which the trained machine learning data processing model has been trained.
